(19) Europäisches Patentamt

European Patent Office

Office européen des brevets

(11) **EP 1 059 771 B1**

(12) **EUROPÄISCHE PATENTSCHRIFT**

(45) Veröffentlichungstag und Bekanntmachung des Hinweises auf die Patenterteilung:
**30.11.2005   Patentblatt 2005/48**

(51) Int Cl.$^7$: **H04L 12/417**

(21) Anmeldenummer: **00110324.1**

(22) Anmeldetag: **13.05.2000**

(54) **Verfahren zur zeitlichen Koordination der Versendung von Daten auf einem Bus**

Method of data transmission scheduling on a bus

Procédé de coordination temporelle de transmission de données sur un bus

(84) Benannte Vertragsstaaten:
**DE FR GB IT**

(30) Priorität: **08.06.1999   DE 19926075**

(43) Veröffentlichungstag der Anmeldung:
**13.12.2000   Patentblatt 2000/50**

(73) Patentinhaber: **Endress + Hauser GmbH + Co. KG**
**79689 Maulburg (DE)**

(72) Erfinder:
• **Kölblin, Robert**
**79539 Lörrach (DE)**

• **Bott, Wolfgang, Dr.**
**76470 Ötigheim (DE)**

(74) Vertreter: **Andres, Angelika Maria**
**PatServ-Zentrale Patentabteilung,**
**Endress + Hauser (Deutschland) Holding GmbH,**
**Postfach 2222**
**79574 Weil/Rhein (DE)**

(56) Entgegenhaltungen:
**US-A- 4 860 006          US-A- 5 001 707**
**US-A- 5 497 374**

## Beschreibung

Die Erfindung bezieht sich auf ein Verfahren zur zeitlichen Koordination der Versendung von zyklischen Datenwerten auf einem Bus, an den Datensender, die eine vorgegebene Anzahl von Datenwerten zyklisch wiederholt senden, und Datenempfänger angeschlossen sind.

In technischen Bereichen kommen digitale Einrichtungen zum seriellen Übertragen von Daten zum Einsatz. Beispielsweise gilt dies für die Datenübertragung in Kraftfahrzeugen sowie in der Meß- und Regeltechnik zum Informationsaustausch zwischen Meßgeräten (Datensendern) und Steuergeräten (Datenempfängern). Der dabei verwendete Bus ist ein sogenannter CSMA/CA-Bus, also ein in der Fachliteratur als Carrier Sense Multiple Access/ Collision-Avoidance-Bus bezeichneter Bus. Zur seriellen Übertragung der Daten wird ein Bus verwendet, der in der Regel aus zwei Leitern besteht. In einem typischen Betrieb des Busses werden in großem Umfang Daten zyklisch von den Meßgeräten zu den Steuergeräten übertragen. Neben den Meßgeräten können auch Aktoren, wie Pumpen, Ventile und dergleichen an den Bus angeschlossen sein. Beim derzeitigen Bus-Standard gibt es keine zeitliche Regelung der Zugriffe der einzelnen Busteilnehmer auf den Bus. Jeder Teilnehmer wartet lediglich eine minimale Busruhezeit ab und sendet nach Ablauf dieser Zeit sein Datentelegramm aus. Dies kann zu sogenannten "Bursts" führen, d.h. es werden in sehr kurzer Zeit sehr viele Telegramme übermittelt. Eine solche Datenflut kann bei einzelnen Busteilnehmern zu einer Überlastung von deren Prozessorbausteinen führen. Im Extremfall kann dies sogar bis zum Datenverlust führen, weil eingegangene Telegramme nicht abgeholt werden.

Aus den Druckschriften US 5497374 und US 5001707 sind zwei Verfahren zum Versenden von zyklischen Datenwerten bekannt, die die oben genannten Nachteile aufweisen.

Der Erfindung liegt die Aufgabe zugrunde, ein Verfahren anzugeben, mit dessen Hilfe das Übertragen der Datenwerte in zeitlich koordinierter Weise unter Vermeidung von Überlastungszuständen erfolgen kann.

Diese Aufgabe wird gemäß der Erfindung gelöst durch ein Verfahren zur zeitlichen Koordination der Versendung von zyklischen Datenwerten auf einem Bus, an den Datensender, die eine vorgegebene Anzahl von Datenwerten zyklisch wiederholt senden, und Datenempfänger angeschlossen sind, bei dem

a) jedem Datensender eine Zykluszeit zugeordnet wird, in der er seine Daten periodisch sendet, wobei die Zykluszeiten ganzzahlige Vielfache einer minimalen Zykluszeit sind,

b) jedem Datenwert eine auf den Beginn der Zykluszeit seines Datensenders bezogene Verzögerungszeit zugeordnet wird,

c) zu jedem Datensender mit einer der Zykluszeit des jeweiligen Datensenders entsprechenden Periode eine Synchronisationsnachricht über den Bus übertragen wird, die eine für den Datensender spezifische Phasenlage bezüglich des Beginns der minimalen Zykluszeit hat und durch den Empfang seiner Synchronisationsnachricht in jedem Datensender das Senden seiner Datenwerte mit der jeweiligen Verzögerungszeit ausgelöst wird, und

d) in jedem Datenempfänger von den Zykluszeiten abhängige Überwachungszeiten festgelegt werden, in denen die Datenempfänger den Bus zum Empfang der gesendeten Datenwerte abhören.

Bei Anwendung des erfindungsgemäßen Verfahrens wird vermieden, daß die Datensender nahezu gleichzeitig mit dem Abgeben ihrer Datenwerte an den Bus beginnen. Das Senden der Datenwerte über den Bus erfolgt vielmehr entsprechend den zugeordneten Zyklus-und Verzögerungszeiten und entsprechend der Phasenlage der jeweiligen Zykluszeit in bezug auf die minimale Zykluszeit zeitlich versetzt, so daß es nicht mehr zu den sogenannten Bursts kommen kann, die nach dem derzeit geltenden Standard zwar nicht als Fehlerzustand betrachtet werden, aber dennoch zu einer übermäßigen Bus-Belastung, unter Umständen sogar zu einem Datenverlust, führen können.

Vorteilhafte Weiterbildungen der Erfindung sind in den Unteransprüchen gekennzeichnet.

Ein Ausführungsbeispiel des erfindungsgemäßen Verfahrens wird nun unter Bezugnahme auf die Zeichnung näher erläutert. In der Zeichnung zeigen:

Fig. 1    in einer schematischen Darstellung einen Bus mit daran angeschlossenen Datensendern und Datenempfängern,

Fig. 2    ein Zeitdiagramm zur Veranschaulichung der Datenübertragung von Datensendern mit verschiedenen Zykluszeiten, und

Fig. 3    ein ähnliches Diagramm wie in Fig. 2 für ein konkretes Zahlenbeispiel.

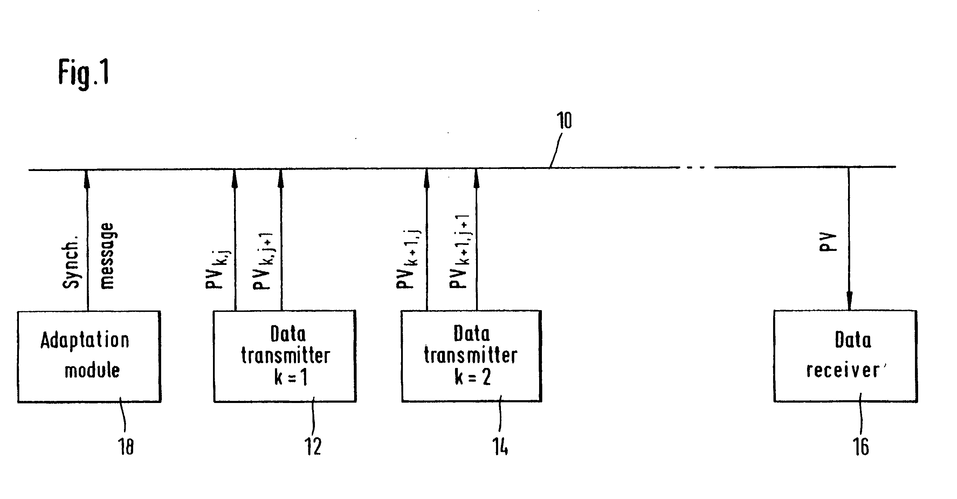

In Fig. 1 ist ein Abschnitt eines Bus 10 dargestellt, an den mehrere Datensender 12, 14 sowie zumindest ein Datenempfänger 16 angeschlossen sind. Ferner ist an den Bus 10 ein Adaptionsmodul 18 angeschlossen, dessen Zweck später noch erläutert wird. Aus Definitionsgründen sind den Datensendern 12, 14 die Ordnungsbezeichnungen $k = 1$, $k = 2$ usw. bis $k = M$ zugeordnet, wobei M die Anzahl der an den Bus angeschlossenen Datensender ist.

Die Datensender 12, 14 erzeugen Datenwerte, die sie zyklisch an den Bus abgeben. Diese Datenwerte sind mit $PV_{k,j}$, $PV_{k,j+1}$ für den k-ten Datensender 12 bzw. mit $PV_{k+1,j}$, $PV_{k+1,\,j+1}$ für den k+1-ten Datensender 14 bezeichnet.

Zur zeitlichen Koordination der Versendung von Datenwerten wird zunächst für jeden Datensender festgelegt, wieviele Datenwerte PV er zyklisch wiederholt senden soll. Dann wird jedem Datensender eine Zykluszeit $T_{CK}$ zugeordnet, also die Zykluszeit $T_{C1}$ dem ersten Datensender, $T_{C2}$ dem zweiten Datensender usw., wobei die Zykluszeiten $T_{Ck}$ auch gleich sein können. Die Zykluszeiten sind dabei ganzzahlige Vielfache einer minimalen Zykluszeit $T_{Cmin}$, die dem ersten Datensender zugeordnet wird.

Jedem Datenwert wird dann eine Verzögerungszeit $T_V$ zugeordnet, die festlegt, in welchem zeitlichen Abstand vom Beginn der dem betreffenden Datensender zugeordneten Zykluszeit $T_{Ck}$ der jeweilige Datenwert $PV_{k,j}$ an den Bus gesendet werden soll. Beispielsweise wird also dem ersten Datenwert $PV_{1,1}$ des ersten Datensenders die Verzögerungszeit $T_{V1,1}$, dem zweiten Datenwert $PV_{1,2}$ des ersten Datensenders die Verzögerungszeit $T_{V1,2}$ ... zugeordnet, während dem ersten Datenwert $PV_{2,1}$ des zweiten Datensenders die Verzögerungszeit $TV_{2,1}$, dem zweiten Datenwert $PV_{2,2}$ des zweiten Datensenders die Verzögerungszeit $T_{V2,2}$ ... zugeordnet usw.

Für jeden Datensender wird von dem Adaptionsmodul 18 eine speziell an ihn adressierte Synchronisationsnachricht an den Bus angelegt, die bei Empfang im zugeordneten Datensender den Beginn der jeweiligen Zykluszeit festlegt.

Diese Synchronisationsnachrichten haben bezüglich der für den ersten Datensender ausgesendeten Synchronisationsnachricht eine vorgegebene Phasenverschiebung, so daß jede Synchronisationsnachricht in bezug auf diesen Beginn der ersten Synchronisationsnachricht eine bestimmte Phasenlage hat. Dies hat zur Folge, daß die Zykluszeiten der einzelnen Datensender bezüglich des Beginns der Zykluszeit des ersten Datensenders mit einer vorgegebenen Phasenverschiebung starten. Die Zykluszeiten der verschiedenen Datensender beginnen also nicht gleichzeitig, sondern entsprechend der Phasenverschiebung der Synchronisationsnachrichten ebenfalls phasenverschoben. Der zeitliche Abstand des Beginns einer Zykluszeit vom Beginn der dem ersten Datensender zugeordneten Zykluszeit wird nachfolgend als die Phasenzeit $t_{Phase}$ des jeweiligen Zyklus bezeichnet.

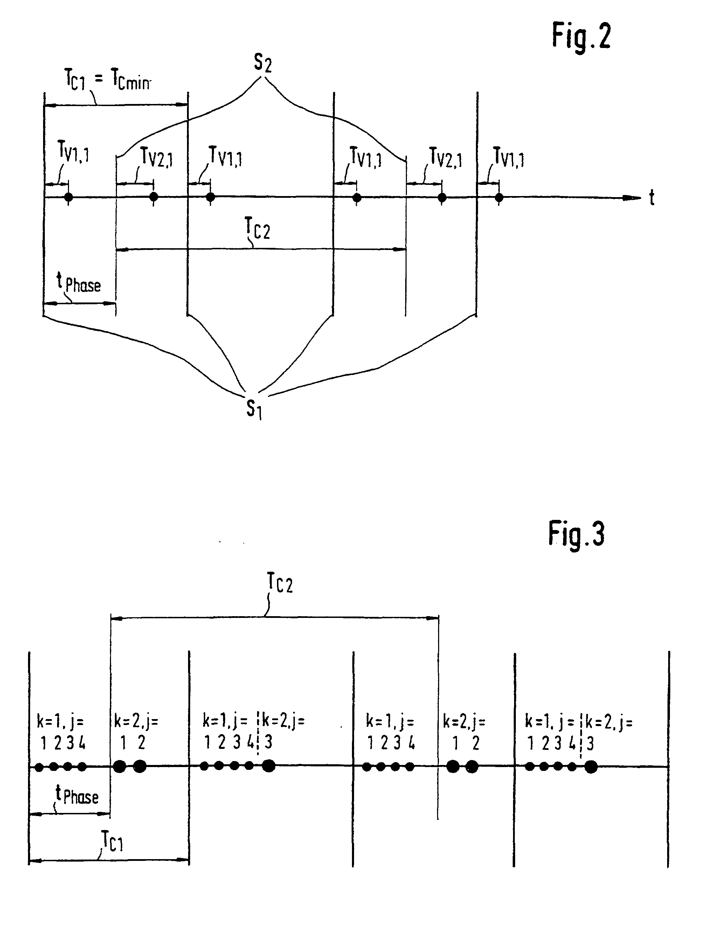

In Fig. 2 ist allgemein in einem Zeitdiagramm dargestellt, wie die Zykluszeiten, die Verzögerungszeiten und die Phasenzeiten von zwei Datensendern bzw. deren Datenwerten relativ zueinander auf der Zeitachse liegen. Mit dicken vertikalen Linien sind die Zeitpunkte markiert, an denen das Adaptionsmodul 18 die Synchronisationsnachricht S1 für den ersten Datensender ($k = 1$) aussendet. Das Aussenden erfolgt periodisch im Abstand der Zykluszeit $T_{C1}$ des ersten Datensenders. Die dünnen vertikalen Linien markieren die Zeitpunkte, an denen das Adaptionsmodul 18 die Synchronisationsnachrichten S2 für den zweiten Datensender ($k = 2$) aussendet. Diese Synchronisationsnachrichten werden periodisch im Abstand der Zykluszeit $T_{C2}$ für den zweiten Datensender ausgesendet. Die Zykluszeit $T_{C1}$ des ersten Datensenders ist die minimale Zykluszeit $T_{cmin}$, und die Zykluszeit $T_{C2}$ für den zweiten Datensender ist ein ganzzahliges Vielfaches der minimalen Zykluszeit, im angegebenen Beispiel gilt

$$T_{C2} = 2\,T_{Cmin} = 2\,T_{C1}.$$

Wie in Fig. 2 zu erkennen ist, wird die Synchronisationsnachricht für den zweiten Datensender um die Zeit $t_{Phase}$ zeitlich gegenüber dem Beginn des minimalen Zeitzyklus des ersten Datensenders versetzt gesendet.

Für die schematische Erläuterung sei angenommen, daß sowohl der erste Datensender als auch der zweite Datensender jeweils nur einen Datenwert an den Bus abgeben soll. Dem Datenwert des ersten Datensenders wird eine Verzögerungszeit $T_{V1,1}$ zugeordnet, die zur Folge hat, daß dieser Datenwert jeweils um diese Zeit verzögert nach dem Empfang der Synchronisationsnachricht gesendet wird. Dies ist auf der Zeitachse mit einem kleinen schwarzen Punkt angegeben. In gleicher Weise wird auch dem Datenwert des zweiten Datensenders eine Verzögerungszeit $T_{V2,1}$ zugeordnet, die zur Folge hat, daß dieser Datenwert um $T_{V2,1}$ gegenüber der den Zeitzyklus $T_{C2}$ startenden Synchronisierungsnachricht verzögert gesendet wird. Dies ist in Fig. 2 durch den großen schwarzen Punkt auf der Zeitachse angegeben.

Aufgrund der zeitlichen Versetzung sowohl der Zykluszeiten als auch der Sendezeitpunkte der Datenwerte kann es auf dem Bus nicht mehr zu einer Überlastung infolge des nahezu gleichzeitigen Sendens zahlreicher Datenwerte kommen.

Es wird nun erläutert, wie das oben beschriebene Koordinationsverfahren in der Praxis angewendet werden kann.

Dazu müssen für das beschriebene Ausführungsbeispiel verschiedene Festlegungen getroffen werden:

## 1. Festlegung für die Zykluszeit

Die minimale Zykluszeit $T_{Cmin}$ ist ein Vielfaches einer Referenzzeit $T_{Cref}$, die 10 ms beträgt. Es gilt also:

$$T_{Cmin} = \nu \cdot T_{cref}, \ \nu = \text{natürliche Zahl}$$

Dabei wird festgelegt: 50 ms $\leq T_{Cmin} \leq$ 3 s.

Für die Bestimmung der Obergrenze spielt eine Rolle, daß die in den Prozessoren vorhandenen Zeitgeber keine beliebige Dynamik hinsichtlich der erreichbaren Intervalle aufweisen und die einzelnen Module am Bus bei Ausfall der Synchronisationsnachrichten aus dem Adaptionsmodul selbständig weiterarbeiten müssen, und daß durch den größten Zyklus bei einer gegebenen festen Bandbreite die Maximalzahl der übertragbaren Datenwerte festgelegt wird. Bei $T_{Cmin}$ = 3 s beträgt die Maximalzahl der übertragbaren Datenwerte im betrachteten Segment des Bus 3000 bei einer zugrunde gelegten Übertragungsrate (Bandbreite) von einem Datenwert pro ms.

Die festgelegte Zykluszeit gilt jeweils für alle Datenwerte eines Moduls am Bus.

Durch Festlegung werden in einem Bussegment maximal zehn verschiedene Zykluszeiten $T_{Ck}$ (k = 1 ... 10) zugelassen.

Die Zykluszeiten $T_{Ck}$ der Module sind ganzzahlige Vielfache der minimalen Zykluszeit $T_{Cmin}$, und sie werden als Vielfache von $T_{Cref}$ = 10 ms angegeben, d.h. daß gilt:

$$T_{Ck} = i \cdot T_{Cmin} = i \cdot \nu \cdot T_{Cref\cdot} \ , \ i = \text{natürliche Zahl}$$

Das Produkt i · $\nu$ ist ein mit der Synchronisationsnachricht übertragener Parameter.

Bei einer maximalen Zykluszeit $T_{Ck}$=3 s und einer Referenzzeit $T_{Cref}$ von 10 ms liegt der Wert i·$\nu$ zwischen 1 und 300, d.h. daß prinzipiell 300 verschiedene Zykluszeiten möglich sind.

## 2. Festlegungen für die Verzögerungszeiten der Datenwerte

Zu jedem Datenwert j einer Zykluszeit $T_{Ck}$ gehört eine Verzögerungszeit $T_{vk,j}$ wobei gilt $T_{Vk,j} < T_{Ck}$. Die Verzögerungszeit $T_{vk,j}$ ist bezogen auf die jeweilige Synchronisationsnachricht und kann ganzzahlige Vielfache von 1 ms betragen (ganzzahlige Vielfache von $T_{Cmin}$ sind dabei nicht zulässig)

Nach Empfang seiner Synchronisationsnachricht setzt jeder Datensender seinen internen Zeitgeber zurück und zieht diesen mit der Verzögerungszeit für den ersten zu sendenden Datenwert auf.

Erst nach Ablauf dieser Verzögerungszeit $T_{vk,j}$ darf der Datensender den betreffenden Datenwert j übertragen. Danach wird der Zeitgeber mit der Differenz zur nächsten Verzögerungszeit aufgezogen, und nach Ablauf dieser Differenzzeit wird der nächste Datenwert gesendet. Beim letzten zu sendenden Datenwert wird der Zeitgeber mit dem Restzeitwert zur vollen Zykluszeit $T_{Ck}$ plus der ersten Verzögerungszeit aufgezogen. Auf diese Weise wird erreicht, daß der Datensender auch bei Ausbleiben der Synchronisationsnachricht weiterarbeiten kann.

## 3. Festlegungen für die Überwachungszeit in den Datenempfängern

Für jeden von einem Datenempfänger zu empfangenden Datenwert y gibt es eine Überwachungszeit, die von der Zykluszeit $T_{Ck}$ des von einem Datensender an den Bus anzulegenden Datenwerts x wie folgt abgeleitet wird:

$$T_U (y) = 2 ... 3 \cdot T_{Ck} \tag{x}$$

## 4. Festlegungen für die Phasenzeiten der Synchronisationsnachrichten

Jede zu einer Zykluszeit gehörende

Synchronisationsnachricht hat eine fest definierte Phasenlage und damit eine feste Phasenzeit innerhalb des Zyklus $T_{Cmin}$ mit der minimalen Zykluszeit. Die Phasenzeiten werden als Vielfache von 1 ms angegeben. Die zahlenwertmäßige Vergabe der Zeiten erfolgt anhand einer Auslastanalyse des Busses. Die Vorgehensweise bei der Datenwert-Übertragungskoordination basiert auf der Modellvorstellung, daß für die Versendung der Datenwerte eine gewisse Bandbreite B zur Verfügung steht, die sich die Datenwerte untereinander aufteilen müssen. Bei einem Bus, z.B. einem CAN-Bus, mit 500 kBit/s und einer 30%-Auslastung für zyklische Werte (5 Byte Nutzdaten) ergibt sich B = 1/(Zeit pro Datenwert) = ca. 1 Datenwert/ms .

Bei einer Zykluszeit $T_{Ck} = i \cdot T_{Cmin}$ eines Datenwerts mit der i-fachen minimalen Zykluszeit $T_{Cmin}$ ergibt sich nur der i-te Anteil an der Bandbreite B.

Es muß also für die Aufteilung der Bandbreite auf die einzelnen Zykluszeiten $T_{Ck}$ gelten:

$$B \geq \sum_{k=1}^{M}$$

(Anzahl $N_{Ck}$ der PVs mit Zykluszeit $T_{Ck}$) / (Zykluszeit $T_{Ck}$) bzw.

$$B \geq \sum_{k=1}^{M} N_{Ck}/T_{Ck} = \Sigma_{k=1}^{M} N_{Ck}/(i_k \cdot T_{Cmin}) \; bzw.$$

$$T_{Cmin} \geq \sum_{k=1}^{M} N_{Ck}/(i_k \cdot B)$$

Dabei gibt M die Anzahl der unterschiedlichen Zykluszeiten an (k = 1 .. M $\leq$ 10).

Ist diese Bedingung verletzt, so ist der Bus überlastet, und es gibt folgende Möglichkeiten, die Auslastung zu reduzieren:

-    Erhöhen von einzelnen Zykluszeiten $T_{Ck}$ oder auch der minimalen Zykluszeit $T_{Cmin}$

-    Reduzieren der Anzahl $N_{Ck}$ der Datenwerte in einer Zyklus zeit.

Beispiel:

| Bus-Auslastungsanalyse | | | | | | | | | | |
|---|---|---|---|---|---|---|---|---|---|---|
| Min. Zykluszeit TCmin [ms]: 100 | | | | | | | | | | |
| Zyklusnummer k | 1 | 2 | 3 | 4 | 7 | 6 | 7 | 8 | 9 | 1 |
| Vielfaches $T_{Cmin}$ (=i) | 1 | 3 | 2 | 5 | | | | | | |
| Zykluszeit [ms] | 100 | 300 | 200 | 500 | | | | | | |
| Anzahl Datenw. | 50 | 10 | 25 | 90 | 0 | 0 | 0 | 0 | 0 | 0 |
| Bus-Auslastung (%) | 50 | 3,333 | 12,5 | 18 | 0 | 0 | 0 | 0 | 0 | 0 |

$$T_{Cmin} = 100 \; ms \geq \sum_{k=1}^{4} N_{Ck}/(i_k \cdot B) =$$

=50 PV/(1·1PV/ms) + 10 PV/(3·1PV/ms) + 25 PV/(2·1PV(ms) + 90 PV/ (5·1PV/ms) = =50 ms + 3,33 ms + 12,5 ms + 18 ms = 83,83 ms

Daraus ergibt sich, daß die Auslastung des Busses durch zykli-sche Datenwerte nicht so hoch ist und bei 83,83 ms /100 ms =

83,83% der zugeteilten Bandbreite liegt.

Projektierung der Phasen- und Verzögerungszeiten

1. Projektierung der Phasenzeiten

Im folgenden wird dargelegt, wie die Phasenzeiten $t_{Phase, k}$ der Synchronisationsnachrichten bestimmt werden. Diese Bestimmung erfolgt direkt gekoppelt mit der Bus-Auslastungsanalyse. Dies bedeutet, daß die Phasenzeit der Synchronisationsnachricht zur Zykluszeit $T_{Ck}$ den bereits benutzten Anteil der Datenwerte der vorherigen Zykluszeiten an der Bandbreite wiederspiegelt.

Sind $N_{Ck}$ Datenwerte mit der Zykluszeit $T_{ck}$ zu senden, so beträgt der Anteil der zu sendenden Datenwerte in jedem minimalen Zyklus genau $N_{Ck}/i$. Da dieser Wert nicht immer ganzzahlig ist, muß aufgerundet werden, und es ergibt sich die Anzahl $n_{Ck}$ der Datenwerte mit der Zykluszeit $T_{Ck}$, die im minimalen Zyklus gesendet werden dürfen (Anzahl der zu belegenden Plätze im minimalen Zyklus)

$$n_{Ck} = \begin{cases} N_{Ck} \ div \ i & \text{für } N_{Ck} \bmod i = 0 \\ N_{Ck} \ div \ i + 1 & \text{sonst} \end{cases}$$

Damit gilt dann für die Phasenzeiten:

$$t_{Phase,} 1 = 0$$

$$t_{Phase,} k = t_{Phase, k-1} + n_{Ck-1} / B$$

für k = 2 .. M, wobei M die Anzahl der unterschiedlichen
Zykluszeiten angibt (M $\leq$ 10).

Die Phasenzeit $t_{Phase,M+1}$ gibt folglich den gesamten benutzten Bandbreite-Anteil wieder, so daß für die Bus-Auslastungsanalyse gilt:

$$t_{Phase,M+1} \leq T_{Cmin} \Rightarrow \text{Auslastung in Ordnung.}$$

2. Projektierung der Verzögerungszeiten

Die Bestimmung der Verzögerungszeiten der $N_{Ck}$ Datenwerte mit der Zykluszeit $T_{ck}$ erfolgt derart, daß innerhalb des minimalen Zyklus entsprechend ihrem Bandbreite-Anteil nur $n_{Ck}$ Datenwerte gesendet werden dürfen. Die $n_{Ck}$ Datenwerte werden also über i minimale Zykluszeiten $T_{Cmin}$ verteilt, und die zugehörigen Verzögerungszeiten unterscheiden sich um ein Vielfaches von $T_{Cmin}$ Die Bestimmung der Verzögerungszeit zum j-ten Datenwert mit der Zykluszeit $T_{Ck} = i \cdot T_{Cmin}$ und damit die Belegung des Bandbreite-Anteils kann als Belegung eines Platzes $\tau_{k,j}$ mit $t_{Phase,k} < \tau_{k,j} \leq t_{Phase,k+1}$ im minimalen Zyklus aufgefaßt werden. Der zu belegende Platz wird wie folgt bestimmt:

$$\tau_{k,J} = [(j-1) \bmod n_{Ck}] \cdot 1ms + 1ms + t_{Phase,k} \text{ für } j = 1...N_{Ck}$$

Es gibt maximal $B \cdot T_{Cmin}$ zu belegende Plätze im minimalen Zyklus. Jeder Platz darf dabei nur mit Datenwerten einer Zykluszeit $T_{Ck} = i \cdot T_{Cmin}$ belegt sein und dies bis zu i-mal, d.h. mit maximal i Datenwerten.

Die Verzögerungszeit $T_{Vk,j}$ zum j-ten Datenwert mit der Zykluszeit $T_{Ck} = i \cdot T_{Cmin}$ ist auf die Synchronisationsnachricht bezogen und wird wie folgt bestimmt:

$$T_{vk,j} = \tau_{k,j} + (0 .. i-1) \cdot T_{Cmin} - t_{Phase,k} \text{ bzw.}$$

$$T_{vk,j} = [(j-1) \text{ div } n_{Ck}] \cdot T_{Cmin} + [(j-1) \text{ mod } n_{Ck}] \cdot 1ms + 1ms$$

$$\text{für } j = 1...N_{Ck}$$

In den obigen Formeln ist "mod" die modulo-Operation (z.B. 5 mod3 = 2), und "div" ist die ganzzahlige Division (z.B. 5 div3 = 1)

Es ist zu erkennen, daß jeder Platz $\tau_{k,j}$ maximal i-mal belegt wird oder, anders ausgedrückt, auf einem benutzten Platz maximal i-1 Datenwerte unbelegt bleiben, auf die gegebenenfalls bei einer Erweiterung des Bus-Abschnitts zurückgegriffen werden kann. Für die gesamte belegte Bandbreite $t_{belegt,gesamt}$ gilt:

$$t_{belegt,gesamt} = \max_{k,j} \{\tau_{k,j}\} \text{ mit } j = 1... N_{Ck}, k = 1...M$$

und schließlich für die Bus-Auslastungsanalyse

$$t_{belegt, gesamt} \leq T_{Cmin}$$

Beispiel: Mit $T_{Cmin} = 100$ ms

| Zykluszeit $T_{Ck}$ | $T_{C1} = 100$ ms | $T_{C2} = 200$ ms |
|---|---|---|
| Anzahl PVs $N_{Ck}$ | $N_{C1} = 4$ | $N_{C2} = 3$ |
| Anzahl PVs $n_{Ck}$ im min. Zyklus | $n_{C1} = 4$ | $n_{C2} = int(3/2+1) = 2$ |
| Phasenzeit $t_{phase,k}$ | $t_{Phase,1} = 0$ ms | $t_{Phase,2} = 4$ ms |
| Platz im min.Zyklus $\tau_{k,j}$ | $\tau_{k=1,j=1,2,3,4} = 1,2,3,4$ ms | $\tau_{k=1,j=1,2,3} = 5,6,5$ ms |
| Verzögerungszeit $T_{vk,j}$ | $T_{vk=1,j=1,2,3,4}=1,2,3,4$ ms | $T_{vk=1,j=1,2,3} =1,2,101$ ms |

Für die Bus-Auslastungsanalyse (s.o.) gilt:

$$t_{Phase,M+1}= t_{belegt,gesamt} = 6 \text{ ms} \leq T_{Cmin} = 100 \text{ ms}$$

In Fig. 3 ist der zeitliche Ablauf der Übertragung von Datenwerten mit den im obigen Beispiel angegebenen Parametern veranschaulicht. Dabei zeigt sich, daß nach Beginn des ersten Zyklus $T_{C1}$ mit der minimalen Zykluszeit nacheinander vier Datenwerte im Abstand ihrer Verzögerungszeiten von jeweils 1 ms gesendet werden. Der Beginn des Zyklus mit der zweiten Zykluszeit $T_{C2}$ beginnt um $t_{Phase}$ phasenverschoben innerhalb des ersten minimalen Zyklus $T_{C1}$, also mit einer Phasenverschiebung von 4 ms, und nach Beginn dieses Zyklus mit der zweiten Zykluszeit $T_{C2}$ werden zunächst zwei Datenwerte mit den Verzögerungszeiten 1 ms und 2 ms bezogen auf den Zyklusbeginn gesendet. Der dritte Datenwert des Zyklus mit der Zykluszeit $T_{C2}$ wird mit einer Verzögerungszeit von 101 ms bezogen auf den Beginn der Zykluszeit $T_{C2}$ gesendet. Bezogen auf den Beginn des zweiten Zyklus mit der Zykluszeit $T_{C1}$ liegt der gesendete dritte Datenwert auf dem fünften Platz nach den vier Datenwerten, die nach Beginn dieses zweiten Zyklus gesendet worden sind.

Wie in dem Diagramm von Fig. 3 zu erkennen ist, werden die Datenwerte, die von einem Datensender mit der Zykluszeit $T_{C2}$ ausgesendet werden, nicht unmittelbar nacheinander im ersten Zyklus mit der Zykluszeit $T_{C1}$ sondern über mehrere solche Zyklen verteilt gesendet. Dies führt zu einer besseren Verteilung der Busbelastung.

In dem Diagramm von Fig. 3 markieren die dicken schwarzen Linien jeweils den Beginn eines Zyklus mit der minimalen Zykluszeit $T_{C1}$, wobei dieser Beginn jeweils durch die Synchronisationsnachricht für den Datensender festgelegt wird, dem diese minimale Zykluszeit $T_{C1}$ zugeordnet ist. Die senkrechten dünnen schwarzen Linien markieren den Beginn der Zykluszeit $T_{C2}$, die einem zweiten Datensender zugeordnet ist, wobei der Beginn durch die Synchronisationsnachricht für diesen zweiten Datensender festgelegt wird.

Bei Anwendung des beschriebenen Verfahrens erfolgt die Übertragung von Datenwerten von mehreren Datensendern über einen Bus mit genauer zeitlicher Koordination in der Weise, daß keine Überlastung des Bus durch sogenannte Bursts mehr auftreten kann.

**Patentansprüche**

1.  Verfahren zur zeitlichen Koordination der Versendung von zyklischen Daten auf einem Bus (10), an den Datensende (12, 14) die eine vorgegebene Anzahl von Daten zyklisch wiederholt senden, und Datenempfänger (16) angeschlossen sind, bei dem

    a) jedem Datensender eine Zykluszeit $T_C$ zugeordnet wird, in der er seine Datenwerte PV periodisch sendet, wobei die Zykluszeiten $T_C$ ganzzahlige Vielfache einer minimalen Zykluszeit $T_{Cmin}$ sind,

    b) jedem Datenwert PV eine auf den Beginn der Zykluszeit $T_C$ seines Datensenders bezogene Verzögerungszeit $T_V$ zugeordnet wird,

    c) zu jedem Datensender mit einer der Zykluszeit $T_C$ des jeweiligen Datensenders entsprechenden Periode eine Synchronisationsnachricht über den Bus übertragen wird, die eine für den Datensender spezifische Phasenlage $t_{Phase}$ bezüglich des Beginns der minimalen Zykluszeit $T_{Cmin}$ hat und durch den Empfang seiner Synchronisationsnachricht in jedem Datensender das Senden seiner Datenwerte PV mit der jeweiligen Verzögerungszeit Tv nicht unterstreischen ausgelöst wird, und

    d) in jedem Datenempfänger von Zykluszeiten $T_C$ abhängige Überwachungszeiten festgelegt werden, in denen die Datenempfänger den Bus zum Empfang der gesendeten Datenwerte PV abhören.

2.  Verfahren nach Anspruch 1, bei dem in jedem Datensender nach Empfang seiner Synchronisationsnachricht ein Zeitgeber gestartet wird, und daß die Datenwerte PV jedes Datensenders dann an den Bus gesendet werden, wenn ihre Verzögerungszeit $T_V$ mit dem vom Zeitgeber erreichten Zeitwert übereinstimmt.

3.  Verfahren nach Anspruch 1 oder 2, bei dem zur Erzielung einer gleichmäßigen Bus-Auslastung von den Datenwerten PV von k Datensendern, denen die Zykluszeiten

$$T_{Ck} = \underline{i} \cdot T_{Cmin}$$

    zugeordnet sind, innerhalb der dem ersten Datensender zugeordneten minimalen Zykluszeit nur

$$n_{Ck} = \begin{cases} N_{Ck} \ div \ i & \text{für } N_{Ck} \ mod \ i = 0 \\ N_{Ck} \ div \ i + 1 & \text{sonst} \end{cases}$$

    $N_{Ck}$:   Anzahl der vom k-ten Datensender zu sendenden Datenwerte PV
    i:        Verhältnis der k-ten Zykluszeit $T_{Ck}$ zur minimalen Zykluszeit $T_{Cmin}$,

    Datenwerte PV gesendet werden, während die restlichen Daten-werte PV auf nachfolgende Zykluszeiten $\underline{T_{Cmin}}$ verteilt werden.

4.  Verfahren nach Anspruch 3, bei dem zur Vermeidung einer Überlastung des Busses folgende Bedingung eingehalten wird:

$$T_{Cmin} \geq \sum_{k=1}^{M} N_{Ck}/(i_k \cdot B) =$$

wobei B die Bandbreite des Busses ist und M die Anzahl der unterschiedlichen Zykluszeiten angibt.

**Claims**

1. A method of scheduling the transmission of cyclic data on a bus (10), to which are connected data transmitters (12, 14), which cyclically repeatedly transmit a predetermined amount of data, and data receivers (16), wherein

   a) each data transmitter is assigned a cycle time $T_c$, during which it periodically transmits its data values PV, the cycle times $T_c$ being integral multiples of a minimum cycle time $T_{cmin}$,

   b) each data value PV is assigned a delay time $T_V$ based on the start of the cycle time $T_c$ of its data transmitter,

   c) a synchronisation message is transmitted via the bus to each data transmitter with an interval corresponding to the cycle time $T_c$ of the respective data transmitter and has a phase position $t_{phase}$ specific to the data transmitter and relating to the start of the minimum cycle time $T_{cmin}$, and the reception of the synchronisation message in each data transmitter triggers the transmission of its data values PV with the respective delay time $T_V$, and

   d) monitoring times, which are dependent upon cycle times $T_c$ and during which the data receivers monitor the bus for reception of the transmitted data values PV, are set in each data receiver.

2. A method according to claim 1, wherein a timer is started in each data transmitter after reception of its synchronisation message, and wherein the data values PV of each data transmitter are then transmitted to the bus when their delay time $T_V$ corresponds to the time value reached by the timer.

3. A method according to claim 1 or 2, wherein, in order to achieve uniform loading of the bus with the data values PV of k data transmitters, which are assigned the cycle times

$$T_{ck} = i \cdot T_{cmin} \, ,$$

   only

$$n_{ck} = \begin{cases} N_{ck} \ div \ i & for \ N_{ck} \ \mathrm{mod} \ i = 0 \\ & otherwise \\ N_{ck} \ div \ i + 1 & \end{cases}$$

   $N_{ck}$: number of data values PV to be transmitted by the $k^{th}$ data transmitter
   i: ratio of the $k^{th}$ cycle time $T_{ck}$ to the minimum cycle time $T_{cmin}$

   data values PV are transmitted within the minimum cycle time assigned to the first data transmitter, while the remaining data values PV are distributed over succeeding cycle times $T_{cmin}$.

4. A method according to claim 3, wherein, in order to avoid overloading the bus, the following condition is observed:

$$T_{cmin} \geq \sum_{k=1}^{M} N_{ck} / \ (i_k \cdot B) =$$

   where B is the bandwidth of the bus and M indicates the number of different cycle times.

**Revendications**

1. Procédé pour la coordination temporelle de l'envoi de données cycliques sur un bus (10), l'émetteur de données (12, 14), lequel bus et ledit émetteur envoient de façon répétée et cyclique un nombre prédéterminé de données, et qui sont raccordés à un destinataire de données (16) pour lequel

   a) on a associé à chaque émetteur de données une durée de cycle $T_C$, pendant laquelle il envoie ses valeurs de données PV de façon périodique ; les temps de cycle $T_C$ étant des multiples entiers d'un temps de cycle minimal $T_{cmin}$.

   b) on a associé à chaque valeur de données PV un temps de retard Tv se rapportant au début du temps de cycle $T_C$ de son émetteur de données,

   c) on transmet un message de synchronisation à chaque émetteur de données par l'intermédiaire d'un bus avec un temps de cycle $T_C$ de l'émetteur de données respectif selon la période, lequel message a un état de phase t phase spécifique pour un émetteur de données par rapport au début du temps de cycle $T_{Cmin}$ minimal et dans lequel procédé on déclenche grâce à la réception de synchronisation, dans chaque émetteur de données, l'émission de ces valeurs de données PV avec le temps de retard Tv respectif, et

   d) on définie dans chaque récepteur de données, des temps de surveillance dépendants de temps de cycle $T_C$, dans lesquels les récepteurs de données écoutent le bus pour réceptionner les valeurs de données PV envoyées.

2. Procédé selon la revendication 1, dans lequel on démarre dans chaque émetteur de données un temporisateur de temps après la réception de son message de synchronisation, et en ce que les valeurs de données PV de chaque émetteur de données sont alors envoyées au bus lorsque leur temps de retard Tv correspond à la valeur de temps atteinte par le temporisateur de temps.

3. Procédé selon la revendication 1 ou 2, dans lequel on émet des valeurs de données PV pour obtenir une utilisation de bus régulière par les valeurs de données PV des émetteurs de données k, auxquels émetteurs on associe les temps de cycle

$$T_{Ck} = i \times T_{Cmin},$$

dans lesquels temps, on a pour le premier temps de cycle minimal associé au premier émetteur de données :

$$n_{Ck} = \begin{cases} N_{Ck} \text{ div } i & \text{pour } N_{Ck} \bmod i = 0 \\ N_{Ck} \text{ div } i + 1 & \text{autrement} \end{cases}$$

$N_{Ck}$ :  Nombre des valeurs de données PV à envoyer par les k - tièmes émetteurs de données
i:  Rapport du k - tième $T_{Ck}$ par rapport au temps de cycle minimale $T_{Cmin}$,

4. Procédé selon la revendication 3, dans lequel on a suivi les conditions suivantes pour éviter une surcharge du bus :

$$T_{Cmin} \geq \sum_{k=1}^{M} N_{Ck}/(i_k \cdot M) =$$

où B est la largeur de bande du bus et M indique le nombre des différents temps de cycle.

Fig.1

# Fig.2

# Fig.3